# EUROPÄISCHE PATENTSCHRIFT

(11) **EP 1 213 661 B1**
(45) Veröffentlichungstag und Bekanntmachung des Hinweises auf die Patenterteilung: **24.09.2003**
(21) Anmeldenummer: 00127105.5
(22) Anmeldetag: 11.12.2000
(51) Int. Cl.: G06F 17/30, H04N 7/173

(54) **Verfahren und Vorrichtung zur kontrollierten Übertragung einer Videosequenz mit einer Nutzinformation**
Method and device for controlled video sequence transmission with useful information
Méthode et appareil pour la transmission controllée des séquences videos avec information utile

(43) Veröffentlichungstag der Anmeldung: 12.06.2002
(73) Patentinhaber: active-film.com AG, 60487 Frankfurt am Main (DE)
(72) Erfinder: Hampl, Tilman, 97297 Waldbüttelbrunn (DE); Sonntag, Ralph, Dr., 36093 Kuenzell (DE); Wauer, Robert, 01904 Neukirch (DE); Glanz, Axel, Dr., 60437 Frankfurt am Main (DE)
(74) Vertreter: Grünecker, Kinkeldey, Stockmair & Schwanhäusser Anwaltssozietät

(56) Entgegenhaltungen:
- WO-A-99/66727
- DE-A- 19 622 596
- US-A- 5 838 314
- US-A- 5 855 008

## Beschreibung

Die Erfindung betrifft ein Verfahren und eine Vorrichtung zur kontrollierten Übertragung einer Videosequenz mit einer Nutzinformation gemäß dem Oberbegriff des Anspruchs 1.

In den Bereichen Internet, Breitbandkabelfemsehen, Festnetz- und Mobilfunksysteme führt die technische Weiterentwicklung zu steigenden Übertragungskapazitäten, die Basis und Voraussetzung für eine verstärkte Nutzung interaktiver oder multimedialer Anwendungen ist. Neben der steigenden Akzeptanz und Verbreitung dieser Medien erhöht auch deren zunehmende Verbindung miteinander ihre Bedeutung. Eine optimierte Werbung in diesen Medien wird somit zum zentralen Thema vieler Werbetreibender.

Um Werbung einem potenziellen Kunden zu präsentieren wurde sie bisher meist mit einem Informationsangebot verbunden (Zeitschriften-, Femseh- und Rundfunkwerbung). Im Internet dagegen gibt es Anbieter, die einem Anwender (User) kostenlose Dienste oder Geld dafür anbieten, dass dem User auf seinem Endgerät Werbung angezeigt wird.

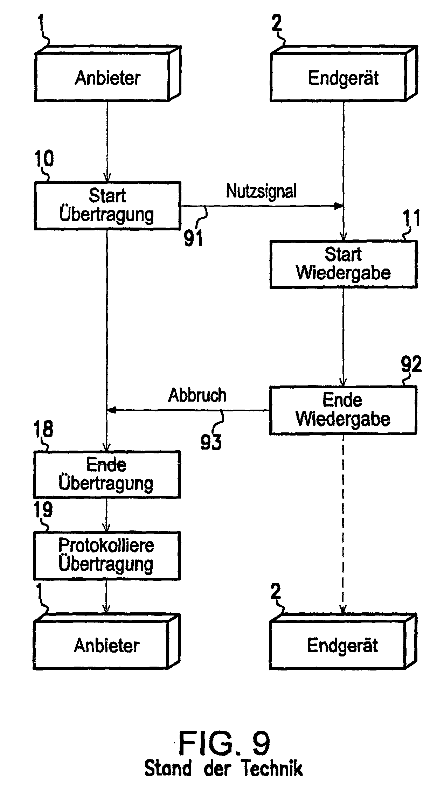

Fig. 9 zeigt schematisiert einen solchen Ablauf zwischen einem Anbieter 1 und einem Endgerät 2. Nach einem Start der Übertragung 10 wird Werbung als Nutzsignal 91 an das Endgerät 2 übertragen. Das übertragene Nutzsignal 91 wird ab einem Start der Wiedergabe 11 mit Hilfe des Endgeräts 2 wiedergegeben. Beendet der User die Wiedergabe 92 in seinem Endgerät 2, so wird dies über eine Abbruchnachricht 93 an den Anbieter 1 mitgeteilt, der in einem Schritt 18 die Übertragung beendet und in einem Schritt 19 den Zeitraum zwischen Start und Ende der Übertragung protokolliert.

In einem solchen System kann der Anbieter 1 dem User eines Endgerätes 2 aufgrund der erfolgten Übertragung von Werbung und der protokollierten Zeitspanne einen entsprechenden Wert gutschreiben, er hat aber keinerlei Kontrolle, ob der User die Werbung auch gesehen hat.

Interaktive Videosequenzen eignen sich besonders zur Verbreitung von Werbung in den genannten Medien. Sie sind aus mehreren Bewegt- bzw. Standbildem zusammengesetzte Videosequenzen, wobei die einzelnen Bewegt- bzw. Standbildabschnitte innerhalb der interaktiven Videosequenz durch Navigationspunkte miteinander verbunden sind. Durch Auswahl und Aktivierung von Schaltflächen in den Bewegbildsequenzen oder Standbildern, sogenannten "Hot Spots" oder aktivierbaren Elementen, kann sich der Nutzer durch die interaktive Videosequenz bewegen. Der Nutzer kann die "Hot Spots" beispielsweise mit bestimmten Tasten seines Endgerätes aktivieren und damit bestimmte Aktionen anstoßen. Aktionen können beispielsweise Verzweigungen zu anderen Videosequenzen, Standbildern, Panoramen oder auch Verweise auf Internetangebote (Links) sein.

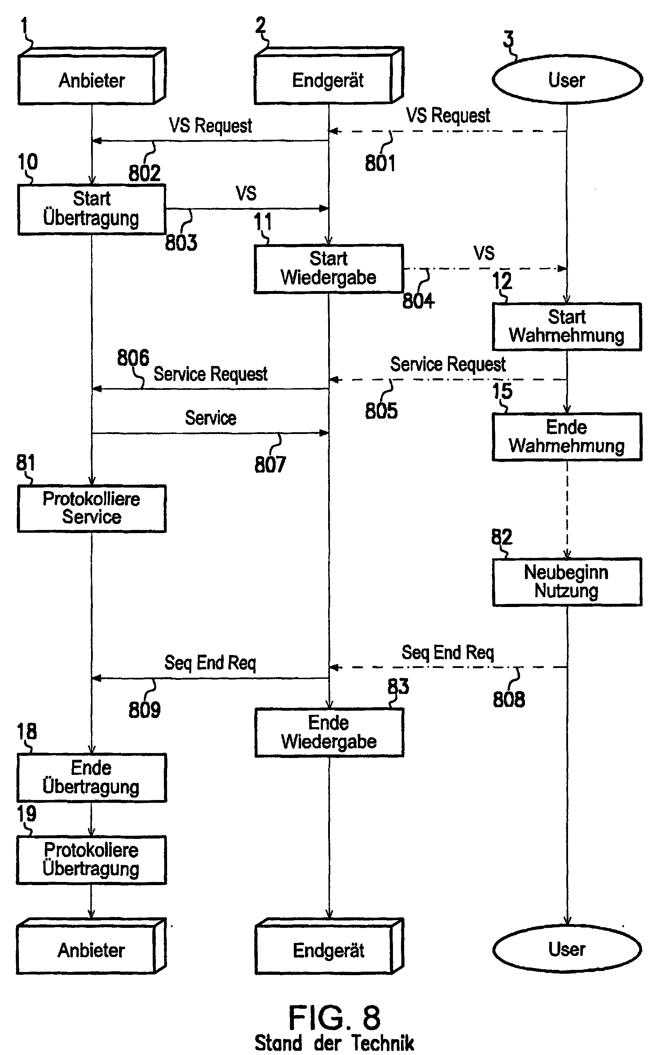

Fig. 8 zeigt neben dem Anbieter 1 und dem Endgerät 2 aus Figur 9 einen User 3, der über das Internet eine interaktive Videosequenz vom Anbieter 1 erhält. Die zwischen dem Endgerät 2 und dem User 3 mit gestrichelten Pfeilen dargestellten Nachrichten 801, 804, 805 und 808 repräsentieren Interaktionen des Users 3 mit dem Endgerät 2.

Durch eine Videosequenzanfrage 801 des Users 3 an sein Endgerät 2, die mit einer Nachricht 802 an den Anbieter 1 weitergeleitet wird, wird die Übertragung der Videosequenz mit einem Schritt 10 gestartet. Eine vom Anbieter 1 zum Endgerät 2 übertragene Videosequenz 803 wird in einem Schritt 11 in dem Endgerät 2 wiedergegeben. Eine visualisierte Videosequenz 804 wird zum User 3 übertragen. Dieser nimmt die Videosequenz 804 von einem Start 12 bis zu einem Ende 15 der Wahrnehmung wahr. Mit einer Interaktion 805 fordert der User 3 über sein Endgerät 2 und eine entsprechende Nachricht 806 einen Dienst 807 des Anbieters 1 an, der dem User 3 als Nutzinformation in der Videosequenz 804 angeboten wurde. Der Anbieter 1 protokolliert den für den User 3 erbrachten Service in einem Schritt 81. Der Dienst 807 ist in der Regel eine genauere Produktinformation oder ein Kaufangebot, kann aber auch bereits ein beworbenes Produkt sein.

Nachdem der User 3 zwischen dem Ende der Wahrnehmung 15 und einem Neubeginn der Nutzung 83 nicht mit seinem Endgerät interagiert hat, löst er mit einer Interaktion 808 über eine entsprechende Nachricht 809 ein Ende der Wiedergabe 83 und ein Ende der Übertragung 18 der Videosequenz aus. In einem Schritt 19 protokolliert wiederum der Anbieter 1 einen Zeitraum der Übertragung.

Ein Anbieter einer interaktiven Videosequenz erhält zumindest eine Rückmeldung über den Erfolg seiner Werbung, Nutzinformation in der Videosequenz, in Form der angeforderten Dienste. Er hat aber weiterhin keine Informationen, ob der User vor dem Ende der Wiedergabe der Videosequenz weitere Nutzinformationen in der interaktiven Videosequenz wahrgenommen hat oder nicht.

US 5,838,314 beschreibt ein Video-Servicesystem zur Bereitstellung von digitalisierten Videoprogrammen, die optional für einen Betrachter kostenlos bereit gestellt werden, wenn er zuvor mit interaktiver Werbung interagiert hat. Das System stellt dem Betrachter zunächst die interaktive Werbung dar und fordert den Betrachter dabei zur Eingabe von Antworten auf, um gezielt Informationen über den Betrachter zu sammeln. Nur wenn alle Fragen beantwortet wurden, überträgt es für den Betrachter eine von diesem gewünschte Videosequenz.

WO/66 727 zeigt ein System für nicht-interaktive Videosequenzen, in welchem auf einem Bildschirm ein Geist angezeigt wird, der abhängig von Interaktionen des Betrachters verschiedene Zustände annimmt.

Die Aufgabe der vorliegenden Erfindung ist es, ein Verfahren, eine Vorrichtung sowie ein System zur kontrollierten Übertragung einer Videosequenz mit einer Nutzinformation bereitzustellen, die eine unnötige Übertragung vermeidet.

Diese Aufgabe wird gemäß der vorliegenden Anmeldung durch die Gegenstände der unabhängigen Ansprüche gelöst. Die abhängigen Ansprüche beschreiben bevorzugte Ausführungsformen der Erfindung.

Gemäß einem Aspekt der Erfindung wird zur kontrollierten Übertragung einer Videosequenz mit einer Nutzinformation, die durch ein Endgerät für einen Betrachter wiedergegeben wird, die Videosequenz zu dem Endgerät übertragen und ein Bestätigungssignal als Bestätigung für eine Wahrnehmung der Nutzinformation durch den Betrachter angefordert, wobei die Wahmehmungsbestätigung durch eine entsprechende Interaktion des Betrachters mit dem Endgerät erfolgt, und ein weiteres Übertragen abhängig von einem erhaltenen Bestätigungssignal erfolgt.

Eine erfindungsgemäße Vorrichtung zur kontrollierten Übertragung einer Videosequenz mit einer Nutzinformation, die mittels eines Endgeräts wiedergegebenen wird, umfasst eine Speichereinheit, die eine Videosequenz für ein Übertragen zu dem Endgerät bereitstellt, eine Steuereinheit, die das Übertragen der Videosequenz, ein Anfordern eines Bestätigungssignals der Wahrnehmung der Nutzinformation und ein von einem erhaltenen Bestätigungssignal abhängiges weiteres Übertragen steuert, wobei die Wahmehmungsbestätigung in Form einer Interaktion des Betrachters mit dem Endgerät erfolgt, und eine Schnittstefleneinheit, über welche die Videosequenz und das Anfordern der Wahmehmungsbestätigung zu dem Endgerät übertragen wird.

Durch das erfindungsgemäße Verfahren und die erfindungsgemäße Vorrichtung wird eine Wahrnehmungsbestätigung angefordert, dadurch kann gezielt kontrolliert werden, ob eine Nutzinformation durch den Betrachter wahrgenommen wurde oder ob der Betrachter allgemein die Nutzinformation in der Videosequenz wahrnimmt. Die Übertragung kann abgebrochen werden, um Übertragungskapazitäten einzusparen, oder modifiziert fortgesetzt werden. Auf diesem Weg können auch kostenlose Dienste, die sich über die Nutzinformation finanzieren, realisiert werden.

Gemäß einer bevorzugten Ausgestaltung des Verfahrens wird die Wahmehmungsbestätigung der Nutzinformation protokolliert, um sie für eine Auswertung verfügbar zu machen. In einer erfindungsgemäßen Vorrichtung ist entsprechend ein Protokolldatenspeicher vorzusehen.

Bei dem Verfahren ist die zur Bestätigung der Wahrnehmung der Nutzinformation notwendige Interaktion variierend ausgestaltet. Dadurch kann vermieden werden, dass der User, ohne auf die Videosequenz zu achten, immer mit der gleichen Interaktion die Wahrnehmung der Nutzinformation bestätigt.

Bei einer vorteilhaften Ausgestaltung des Verfahrens wird eine Zufallszahl erzeugt oder die erfindungsgemäße Vorrichtung um einen Zufallszahlengenerator erweitert, jeweils um die Ausgestaltung der zu der Bestätigung notwendigen Interaktion mit einer Zufallszahl zu beeinflussen. Zusätzlich ist eine zufällige Variation weniger anfällig gegen Manipulationen als eine deterministische Variation.

Besonders zweckmäßig ist es, wenn die Videosequenz eine interaktive Videosequenz ist, deren Aktivierungen durch einen Betrachter protokollierbar sind, da eine dem Betrachter bekannte Art der Interaktion mit der interaktiven Videosequenz für die Wahrnehmungsbestätigung verwendet werden kann.

Gemäß einer weiteren bevorzugten Ausgestaltung des Verfahrens werden die Inhalte der Videosequenz abhängig von den protokollierten Interaktionen oder Aktivierungen in der Videosequenz gesteuert. Somit kann die Videosequenz an das individuelle Verhalten des Betrachters, die Eigenheiten des Endgerätes oder andere Randbedingungen angepasst werden. In einer entsprechenden bevorzugten Ausgestaltung der Vorrichtung steuert eine Steuereinheit die Inhalte der Videosequenz.

Bei einer vorteilhaften Ausgestaltung des Verfahrens erfolgt das Anfordern der Wahrnehmungsbestätigung abhängig von der Videosequenz an einer bestimmten Stelle der Videosequenz. Dadurch können gezielt bestimmte Nutzinformationen auf ihre Wahrnehmung durch die Person überprüft werden.

Besonders zweckmäßig ist es, das Endgerät nach einem Mobilfunkstandard auszubilden und somit die Videosequenz nach einem Mobilfunkstandard zu übertragen, da dem Betrachter somit mobil und unabhängig von Datenträgem eine Vielzahl von Videosequenzen verfügbar gemacht wird.

Die Erfindung wird im folgenden anhand der beigefügten Figuren anhand von bevorzugten Ausführungsformen näher beschrieben. Die Figuren zeigen im einzelnen:
- Fig. 1: Nachrichtenflussdiagramm für eine bevorzugte Ausgestaltung eines erfindungsgemäßen Verfahrens,
- Fig. 2: Ablaufdiagramm einer bevorzugten Ausführungsform des erfindungsgemäßen Verfahrens,
- Fig. 3: Ablaufdiagramm einer weiteren Ausführungsform des erfindungsgemäßen Verfahrens,
- Fig. 4: Ablaufdiagramm für eine mögliche Ausgestaltung des Schrittes Anfordern in den Fig. 2 und 3,
- Fig. 5: Ablaufdiagramm für eine mögliche Ausgestaltung des Schrittes Protokollieren aus den Fig. 2 und 3,
- Fig. 6: Schematische Darstellung einer bevorzugten Ausgestaltung einer erfindungsgemäßen Vorrichtung,
- Fig. 7: Schematische Darstellung einer bevorzugten Ausgestaltung eines erfindungsgemäßen Systems,
- Fig. 8: Nachrichtenflussdiagramm für ein Verfahren gemäß dem Stand der Technik,
- Fig. 9: Grundsätzliches Nachrichtenflussdiagramm für ein herkömmliches Verfahren,
- Fig. 10: Schematische Darstellung einer weiteren Ausgestaltung eines anbieterseitigen Systems, und
- Fig. 11: Schematische Darstellung einer weiteren bevorzugten Ausgestaltung des anbieterseitigen Systems aus Fig. 10.

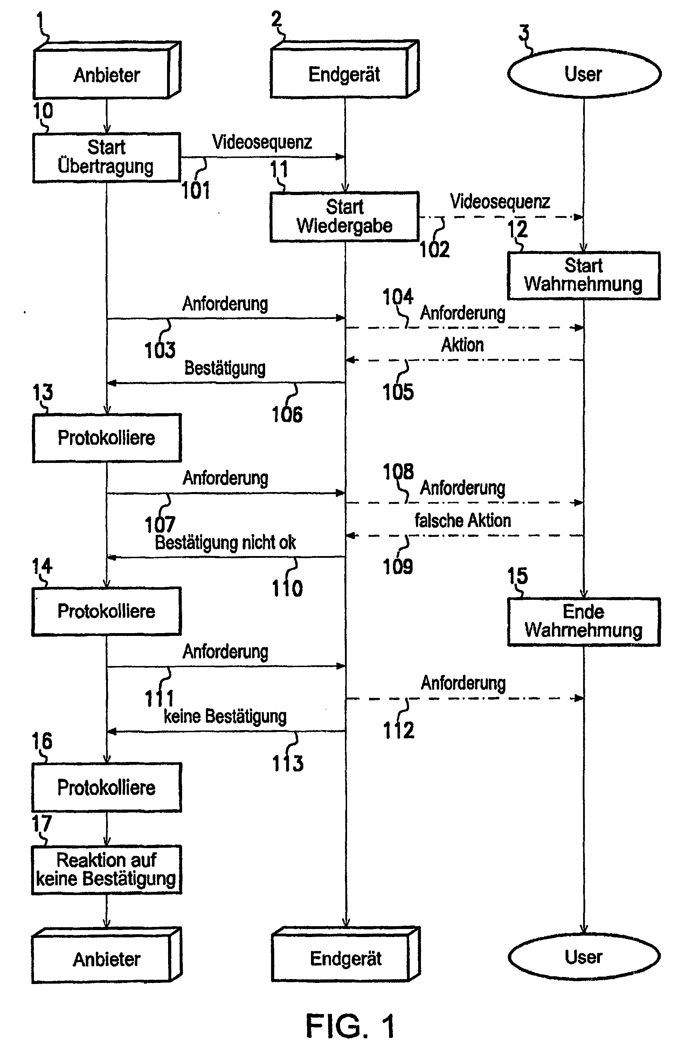

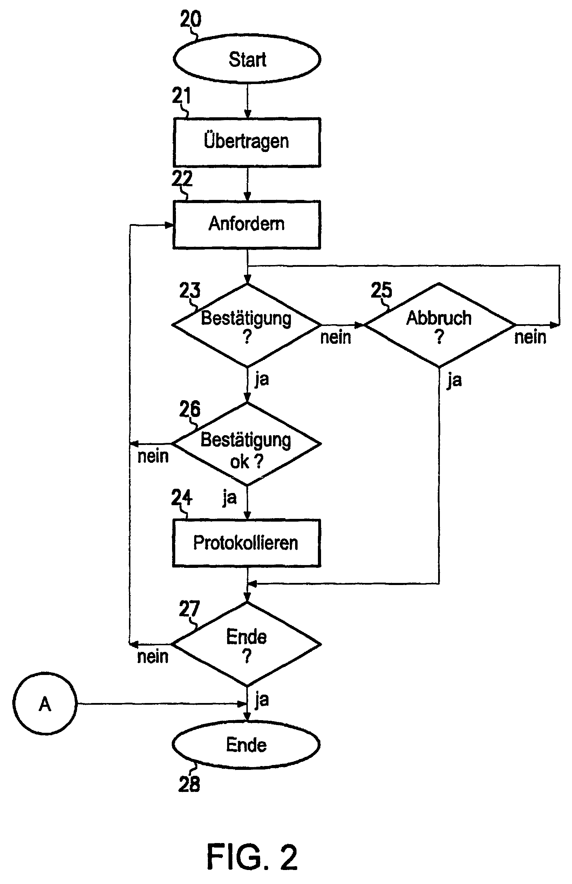

Im folgenden wird zunächst ein Ausführungsbeispiel für ein erfindungsgemäßes Verfahren anhand von Fig. 1 beschrieben wird. Anschließend werden Schritte des erfindungsgemäßes Verfahrens in verschiedenen Ausgestaltungsvarianten in bezug auf die Figuren 2 bis 5 erläutert.

Ein Anbieter bietet kostenlos interaktive Videosequenzen über ein UMTS-System an, die mit Werbung als Nutzinformation mittels aktivierbarer Elemente (Hot Spots) versehen sind. Als Endgerät wird ein UMTS-Mobilfunkgerät des Betrachters verwendet, das über das UMTS-System die aktuellen Tagesnachrichten als interaktive Videosequenz von dem Anbieter anfordert. Einige Hot Spots in der interaktiven Videosequenz dienen zur weiteren Verzweigung zu Detailnachrichten, andere präsentieren die Nutzinformation in Form von Werbung und verzweigen zu entsprechenden weiteren Werbeinformationen. In diesem ersten Beispiel wird dem Betrachter (User) die interaktive Videosequenz mit den aktuellen Tagesnachrichten so lange kostenlos bereitgestellt, wie er die Wahrnehmung der Nutzinformation in der Videosequenz bestätigt oder zumindest nicht eine maximale Anzahl von Fehlversuchen bei der Bestätigung überschreitet. Dadurch wird sichergestellt, dass keine Übertragung erfolgt, welche die Übertragungskapazität des UMTS-Netzes unnötig belastet. Liegt das UMTS-Mobilfunkgerät beispielsweise im eingeschalteten Zustand und bei laufender Übertragung einer Videosequenz in der Tasche seines Besitzers, so werden seine Tasten nur sporadisch und unbeabsichtigt gedrückt und die Übertragung wird durch das erfindungsgemäße Verfahren beendet.

Fig. 1 zeigt einen Anbieter 1, ein Endgerät 2 und einen User 3. Mit einem Schritt 10 stellt der Anbieter 1 eine Videosequenz dem Endgerät 2 bereit. Die Videosequenz wird als Nachricht 101 an das Endgerät 2 übertragen, um dort in einem Schritt 11 für den User 3 als Nachricht 102 wiedergegeben zu werden. Wie bereits für die Fig. 8 angemerkt, werden Interaktionen 102, 104, 105 zwischen dem Endgerät 2 und dem User 3 in Form von gestrichelten Pfeilen dargestellt Mit einem Schritt 12 ist ein Beginn der Wahrnehmung der wiedergegebenen Videosequenz 102 durch den User 3 markiert.

Bei dem Anbieter 1 wird eine Anforderung 103 erstellt und an das Endgerät 2 übertragen, dieses gibt sie als Anforderung 104 für den User 3 wieder. In der wiedergegebenen Videosequenz 102 ist jeder Werbung tragende Hot Spot mit einer sichtbaren Nummer versehen. Bei der Erstellung der Anforderung 103 beim Anbieter 1 wird variierend eine Nutzinformation ausgewählt, dessen Nummer durch den User 3 als Bestätigung für die Wahrnehmung der Nutzinformation auf der Tastatur des Endgerätes 2 eingegeben werden muss. Die Anforderung 104 kann dem User als Hot Spot oder separiert von der Videosequenz angezeigt werden.

Drückt der User 3 in einer Aktion 105 die für die Anforderung 104 richtige Taste, so wird mit einer Nachricht 106 die Bestätigung dem Anbieter 1 als erfolgreich mitgeteilt. Bei dem Anbieter 1 wird die Bestätigung optional protokolliert 13. Erfolgt auf eine weitere Anforderung 107 und deren Darstellung 108 eine falsche Aktion 109, so wird dem Anbieter 1 mit einer Nachricht 110 die nicht erfolgte Bestätigung gemeldet, die in einem ebenfalls optionalen Schritt 14 protokolliert wird.

Mit einem Schritt 15 endet die Wahrnehmung des Users 3 für die vom Endgerät 2 wiedergegebene Videosequenz 102. Eine Anforderung 111 und die wiedergegebene Anforderung 112 werden nicht bestätigt, was dem Anbieter 1 über eine Nachricht 113 mitgeteilt wird. In einem optionalen Schritt 16 protokolliert der Anbieter diese nicht erfolgte Bestätigung und reagiert im Schritt 17 in der Regel mit dem Ende der Bereitstellung der Videosequenz für das Endgerät 2.

Für das erste Beispiel des UMTS-Mobilfunkgeräts sollen seinem Besitzer oder User die Nachrichten solange übertragen werden, wie er eine minimale Aufmerksamkeit zeigt. Also können die optionalen Schritte 13 und 16 entfallen, da nur falsche Aktionen 109 des Users mit dem Schritt 14 gezählt und eine maximale Zahl von Fehlversuchen überwacht wird. Eine Überschreitung der Fehlversuche oder eine ausbleibende Bestätigung 113 führt zu dem Abbruch der Übertragung 17.

In einem zweiten Beispiel wird die Übertragung der Videosequenz 101 über das Internet durch den Anbieter 1 so lange aufrecht erhalten, wie der User 3 auf Anforderungen 104, 108 mit Tastendrücken 105,109 auf seinem PC als Endgerät 2 reagiert. Für einen korrekten Tastendruck 105 werden ihm im Schritt 13 Bonuspunkte gutgeschrieben. Für eine falsche Tasteneingabe 109 entfällt der optionale Schritt 14. Auf die Nachricht 113 reagiert der Anbieter 1 mit einer Auswertung der gesammelten Bonuspunkte im optionalen Schritt 16 und wiederum mit dem Abbruch der Übertragung im Schritt 17.

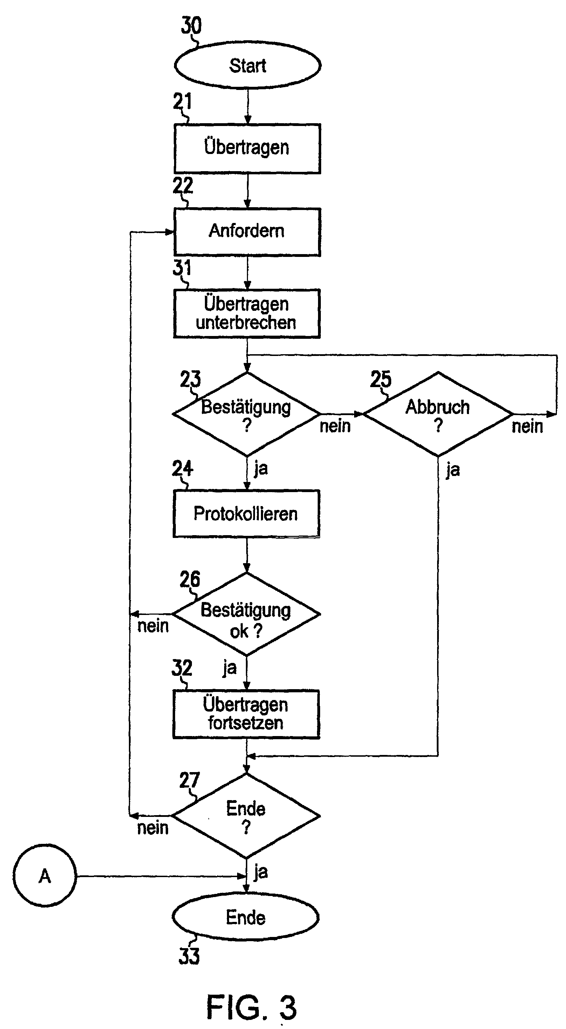

Fig. 2 zeigt von Start 20 bis Ende 28 die Schritte einer Ausführungsform eines erfindungsgemäßen Verfahrens. In Schritt 21 wird eine Videosequenz zu einem Endgerät übertragen und mit Schritt 22 wird eine Bestätigung einer Nutzinformation in der Videosequenz angefordert, wobei die Bestätigung durch eine Interaktion eines Betrachters der Videosequenz mit dem Endgerät erfolgt. Die weiteren Schritte in Fig. 2 sind optional und können, wie in den Fig. 3 bis 5 angedeutet, unterschiedlich ausgestaltet sein. Für das erfindungsgemäße Verfahren muss nur das weitere Übertragen abhängig von einem erhaltenen Bestätigungssignal gestaltet werden.

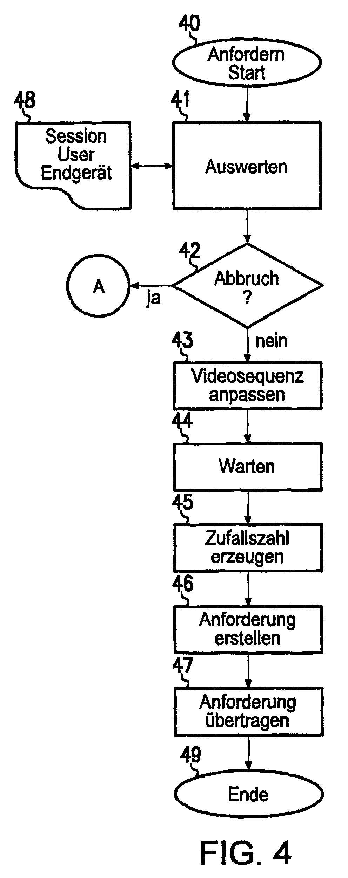

Eine Abfrage 23 prüft, ob eine Bestätigung in Form einer Interaktion mit dem Endgerät erfolgt ist. Für den Fall einer Bestätigung, die gemäß Abfrage 26 positiv erfolgte, wird die Bestätigung in Schritt 24 protokolliert, bevor mit der Abfrage 27 ein mögliches Ende des Verfahrens geprüft wird. Für die Fälle, dass das Verfahren gemäß Abfrage 27 nicht zu beenden ist oder die Bestätigung gemäß Abfrage 26 nicht korrekt erfolgte, wird die Bestätigung im Schritt 22 erneut angefordert. Eine Abfrage 25 bei nicht erfolgter Bestätigung realisiert ein Abbruchkriterium für eine Wartezeit auf eine mögliche Bestätigung. Ein Anschlusspunkt A dient als Rücksprungmöglichkeit aus den Schritten 22 in Fig. 3 und 24 in Fig. 4. Je nach Anwendungsfall sind die optionalen Schritte 23 bis 27 unterschiedlich auszugestalten oder zu verwenden.

Eine Videosequenz besteht aus visuellen und auditiven Anteilen, kann aber auch nur einen dieser Anteile enthalten. Die zu der Bestätigung notwendige Interaktion ist nicht auf einen Tastendruck beschränkt, sondern kann ebenso akustisch als Eingabe über ein Mikrofon, als Eingabe über eine Zeigeeinheit des Endgerätes, als Auswahl aus einer vom Endgerät angebotenen Liste oder aktivieren eines Hot Spots erfolgen. Das Anfordern in dem Schritt 22 kann beispielsweise auch mittels einer sonst als Werbefläche oder Hot Spot verwendeten Fläche erfolgen, die unabhängig von der Nutzinformation die Anforderung "Drücken Sie die Taste 3 zum Fortsetzen der Wiedergabe" darstellt. Wobei die zu drückende Taste und die Anordnung des Hot Spots in der Videosequenz zufällig bestimmt wird. Das zufällige Einstreuen der Anforderung in die Hot Spots bewirkt, dass der Betrachter die Anforderung suchen muss und dabei gezwungen wird die Nutzinformation, zumindest als nicht die gesuchte _{"}Weiter-Taste" enthaltend, wahrzunehmen.

Neben den beiden Anwendungsansätzen _{"}Wert gegen Werbung" oder _{"}kostenloser Dienst gegen Werbung", wie sie in den beiden Beispielen zu Figur 1 angedeutet sind, gibt es auch zwei Ansätze für unterschiedliche Ausgestaltung des Verfahrens. Das Verfahren aus Figur 2 ist für die beiden genannten Beispiele geeignet, berücksichtigt aber nicht, dass dem Betrachter die Videosequenz länger übertragen wird, als er Aufmerksamkeit zeigt. Für kostenlose Dienste ist daher eine Ausgestaltung gemäß Figur 3 besser geeignet.

Von Start 30 bis Ende 33 ist in Fig. 3 eine weitere Ausgestaltungsform des Verfahrens aus Fig. 2 dargestellt. Nach den Schritten 21 und 22 des Übertragens der Videosequenz und des Anforderns der Bestätigung wird mit Schritt 31 das Übertragen so lange unterbrochen, bis eine erfolgreiche Bestätigung erfolgt. Nach Auswertung über die Abfragen 23 und 26, sowie dem Protokollieren in Schritt 24 wird dann das Übertragen der Videosequenz in Schritt 32 fortgesetzt. Bis auf das Unterbrechen 31 und das Fortsetzen 32 der Übertragung der Videosequenz und ein Protokollieren der Bestätigung in Schritt 24 unabhängig von einer erfolgreichen Bestätigung, ist die Darstellung von Fig. 3 analog zu der von Fig. 2.

In dem Verfahren nach Fig. 3 kann das Anfordern implizit durch Unterbrechen der Wiedergabe erfolgen. Für das erste Beispiel zu Figur 1, in dem an jeder Nutzinformation eine Ziffer (hier von 0 bis 9) angezeigt wird, wird als Regel für die Bestätigung vereinbart: Die Wiedergabe der Videosequenz wird fortgesetzt nach Drücken der Taste entsprechend einer höchsten an den einzelnen Nutzinformationen angezeigten Ziffer. Je nach Ausgestaltung kann es sinnvoll sein die Ziffern nicht immer, sondern nur temporär einzublenden, um die Aufmerksamkeit des Betrachters gezielt zu steuern. In einer weiteren Ausgestaltungsform des Verfahrens wird maximal an einer Nutzinformation in der Videosequenz eine Ziffer eingeblendet, der Betrachter muss auf Anforderung oder bei Unterbrechen der Wiedergabe als Wahrnehmungsbestätigung diese Ziffer als Taste drücken.

Derzeit werden interaktive Videosequenzen üblicherweise mittels der Software QUICKTIME von Apple, WINDOWS MEDIAPLAYER von Microsoft oder REALPLAYER von Real wiedergegeben. Für die Software QUICKTIME wurde eine Protokollierungsmöglichkeit realisiert, die ein Video Data Mining ermöglicht. Für interaktive Videosequenzen wird unter dem Begriff Video Data Mining die Auswertung von Betrachteraktionen mit der interaktiven Videosequenz mittels statistischer Methoden verstanden. Unter diesem Begriff sind das Protokollieren, die Aggregation und die Interpretation gewonnener Daten zusammengefasst. Neben der Erfassung der Bestätigung des Nutzinformation in dem erfindungsgemäßen Verfahren ist das Video Data Mining ein entscheidender Aspekt für das Bereitstellen der Videosequenz für einen Betrachter, da die Videosequenz angepasst an die Gewohnheiten, das Endgerät oder die bisher erfolgten Interaktionen des Betrachters erfolgen kann.

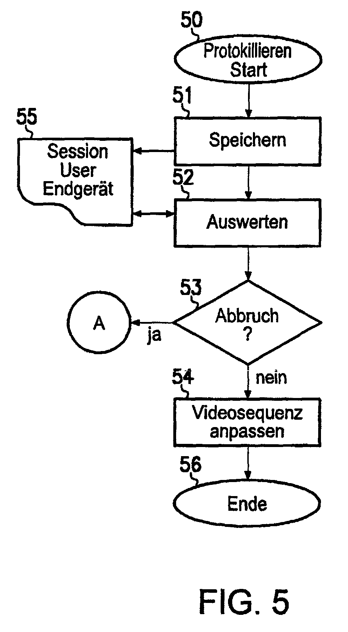

Um weitere Ausgestaltungsmöglichkeiten der Verfahren aus den Figuren 2 und 3 darzulegen, sind in Fig. 4 der Schritt 22 des Anforderns der Bestätigung und in Figur 5 der Schritt 24 des Protokollierens in optionale Teilschritte zerlegt.

Fig. 4 zeigt ein Flussdiagramm für eine weitere Ausgestaltung des Schrittes 22 von Start 40 bis Ende 49. In Schritt 41 wird zunächst die vorhandene Information 48 über den User oder Betrachter, sein Endgerät und einen Vorgang (Session) ausgewertet. Von Beginn bis zum Ende der Übertragung einer Videosequenz ist dieser eine Vorgang mit dem User als Session identifizierbar. Üblicherweise wird der User über ein Passwort oder über sein Endgerät, beispielsweise dessen IP-Adresse identifiziert. Aus der Auswertung 41 kann für eine Abfrage 42 die Entscheidung über einen Abbruch des gesamten Verfahrens via Anschlussstelle A erfolgen, wenn beispielsweise eine maximale Zahl an Fehlversuchen für eine Bestätigung gemäß dem ersten Beispiel zu Figur 1 erreicht ist. Weiter kann in dem Schritt 41 anhand der bisher in der Session erfolgten Interaktionen des Users, eine im Vergleich zu den für den User gespeicherten Durchschnittswerten untypische Inaktivität, oder verlangsamte Reaktionszeit erkannt werden, um die Videosequenz, seine aktivierbaren Elemente oder die Nutzinformation in Schritt 43 entsprechend anzupassen.

Die vorhandene Information 48 entsteht durch Video Data Mining, protokollieren der Interaktionen des Users mit dem Endgerät in der Session oder in vorausgegangenen Sessions, statistischen Auswertungen und freiwillige Angaben des Users. Protokolliert werden neben den Bestätigungen auch alle Interaktionen oder ausbleibenden Interaktionen des Users mit den Hot Spots in interaktiven Videosequenzen, um diese und folgende interaktive Videosequenzen optimal an den User anpassen zu können.

Schritt 44 in Figur 4 kann eine Wartezeit erzeugen, um das Anfordern einer Bestätigung an das Auftauchen einer bestimmten Nutzinformation in der Videosequenz zu koppeln oder einfach einen Zeitraum zwischen zwei Anforderungen von Bestätigungen zu gewährleisten. In Schritt 45 wird eine Zufallszahl erzeugt. Diese Zufallszahl kann durch einen Hardware-Zufallszahlengenerator oder durch einen Pseudo-Zufallszahlengenerator mittels Software erzeugt werden. In manchen Fällen mag es genügen, eine Zahl nach dem Prinzip der gleichmäßigen Verteilung in möglichen Werten zu bestimmen, um diese variierende Zahl als Zufallszahl zu verwenden. Sollte das Erzeugen der Zufallszahl im Endgerät des Users erfolgen, so sind entsprechende Vorkehrungen zu treffen, dass die Zufallszahlenerzeugung nicht gestört wird.

In Schritt 46 wird eine Anforderung der Bestätigung der Wahrnehmung der Nutzinformation in der Videosequenz erstellt. Die Wahrnehmungsbestätigung erfolgt durch eine entsprechende Interaktion des Betrachters mit dem Endgerät. Die erzeugte Zufallszahl kann verwendet werden, um die entsprechende Interaktion des Betrachters, die Nutzinformation oder die Anforderung variierend auszugestalten. Da die Anforderung als Nutzinformation in die Videosequenz eingebunden werden kann, kann man auch von einer nutzinformations-abhängigen Interaktion des Betrachters sprechen. Die Anforderung wird dann von dem Anbieter in Schritt 47 für das Endgerät übertragen. Das Verwalten der Bestätigung in den Schritten 23 bis 27 und 41 bis 43 ist ebenfalls auf Interaktionen oder Aktivierungen von Hot Spots durch einen Betrachter in einer interaktiven Videosequenz anwendbar.

In einer weiteren Ausgestaltung des Schrittes Protokollieren von Start 50 zu Ende 56 in Fig. 5 wird in einem Schritt 51 zu den vorhandenen Informationen 55 aus Session-, User- und Endgerät-bezogenen Daten, entsprechend den vorhandenen Informationen 48 aus Figur 4, eine zu protokollierende Interaktion gespeichert. Danach erfolgt in einem Schritt 52 eine Auswertung der vorhandenen Informationen 55. Als Ergebnis des Schrittes 52 kann jeweils analog zu Figur 4 ein Abbruch über Abfrage 53 und Anschlusspunkt A oder eine Anpassung der Videosequenz in einem Schritt 54 gesteuert werden. Der Schritt 54 ist beispielsweise geeignet, um dem Betrachter der Videosequenz nach falscher Eingabe die Nutzinformation solange erneut oder modifiziert wiederzugeben, bis die Bestätigung der Wahrnehmung erfolgt. Er kann aber auch analog zu Schritt 43 in Fig. 4 verwendet werden.

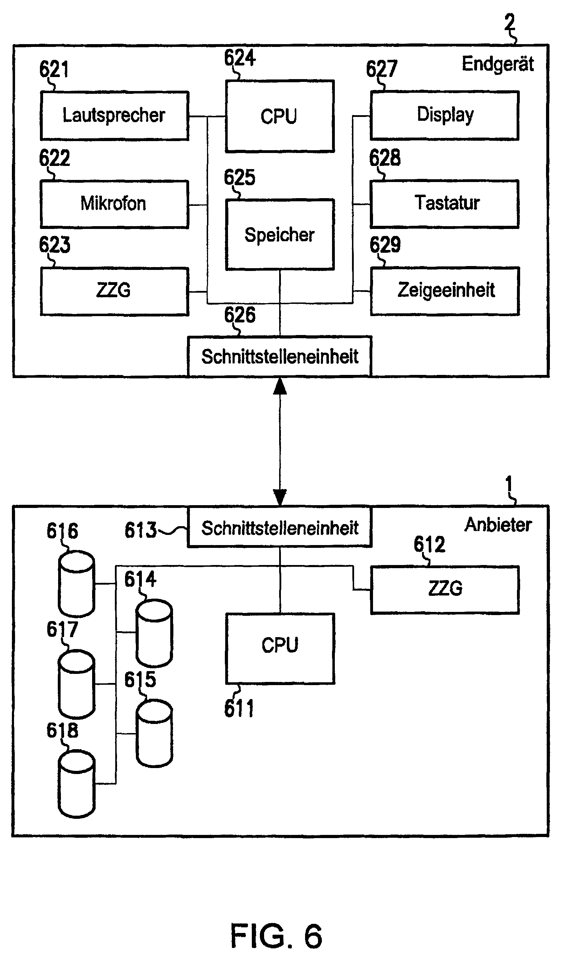

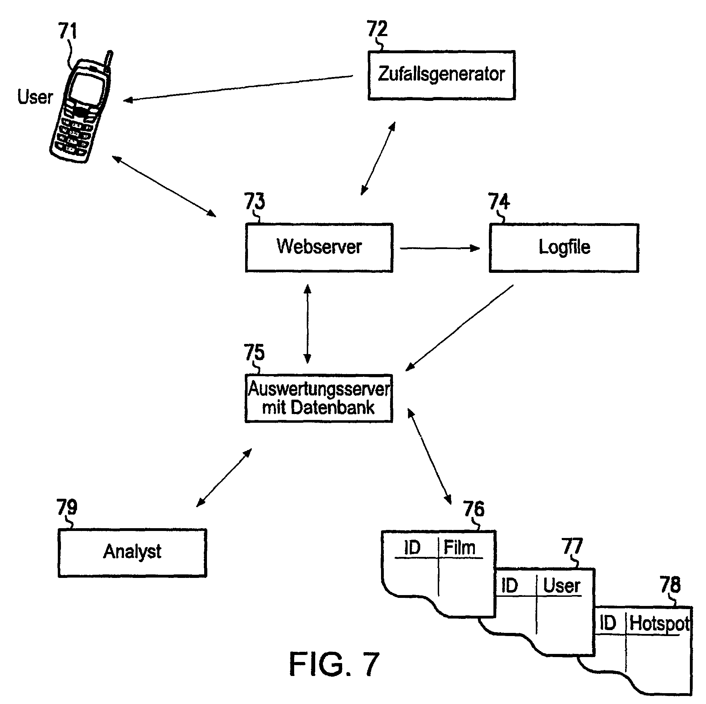

Nachdem das erfinderische Verfahren in einigen Ausgestaltungsformen erläutert wurde, wird im folgenden zunächst ein beispielhafter Überblick über die Anwendbarkeit des Verfahrens in verschiedenen Systemen und anschließend eine konkrete Ausführungsform für eine erfindungsgemäße Vorrichtung anhand von Fig. 6 sowie ein erfindungsgemäßes System anhand von Fig. 7 beschrieben.

Die technischen Voraussetzungen für die Realisierung eines erfindungsgemäßen Verfahrens sind in verschiedenen Systemen gegeben. Es kann beispielsweise in Mobilfunknetzen, Telefon-Festnetzen, Breitbandkabelnetzen für Fernsehanwendungen mit Rückkanal oder dem Internet eingesetzt werden. So kommen als Endgeräte beispielsweise in Frage Mobilfunktelefone, mobile oder fest mit einem Netz verbundene Computer, persönliche digitale Assistenten (PDA) oder Organizer. Die eigentliche Übertragung der Videosequenz vom Anbieter 1 zum Endgerät 2 ist zunächst unabhängig von dem erfindungsgemäßen Verfahren. Allein im Bereich Mobilfunk sind für die Übertragung mit GSM, HSCSD (High Speed Circuit Switched Data), GPRS (General Packet Radio Service), EDGE (Enhanced Data for GSM Evolution), CDSL (Consumer Digital Subscriber Line), UMTS (Universal Mobile Telecommunication System) und Bluetooth verschiedenste Übertragungsstandards definiert.

Als wichtigster Anwendungsbereich sind zur Zeit interaktive Videosequenzen mit Werbeinhalten, die online für mobile Einheiten bereitgestellt werden, zu sehen.

In Fig. 6 ist für einen Anbieter 1 eine Steuereinheit 611, ein Zufallszahlengenerator (ZZG) 612, eine Schnittstelleneinheit 613, ein Protokollspeicher 614, ein Sequenzspeicher 615, ein Userdatenspeicher 616, ein Endgerätedatenspeicher 617 und ein Session-Datenspeicher 618 dargestellt. Für das Endgerät 2 zeigt Fig. 6 eine CPU 624, einen Speicher 625, eine Schnittstelleneinheit 626, einen Zufallszahlengenerator 623 und eine Vielzahl von Wiedergabe- und Interaktionseinheiten: einen Lautsprecher 621, ein Mikrofon 622, ein Display 627, eine Tastatur 628 und eine Zeigeeinheit 629. Da der Anbieter 1 in der Regel ein System, wie in Figur 7 dargestellt, sein wird, ist der Detaillierungsgrad für den Anbieter 1 in Figur 6 nicht so hoch wie für das Endgerät 2.

Der Anbieter 1 überträgt gesteuert von der CPU 611 über seine Schnittstelleneinheit 613 eine Videosequenz aus den Daten des Sequenzdatenspeichers 615 für das Endgerät 2. Die CPU 611 steuert weiterhin das Erstellen einer Anforderung, die eine Bestätigung der Nutzinformation in der Videosequenz durch eine entsprechende Interaktion eines Betrachters der Videosequenz mit dem Endgerät 2 anfordert. Abhängig von einem erhaltenen Bestätigungssignal steuert die CPU 611 das weitere Übertragen der Videosequenz. Der Zufallszahlengenerator 612 kann für die Anforderung eine Zufallszahl bereitstellen, um die entsprechende Interaktion zufällig zu variieren. Die CPU 611 verwendet den Userdatenspeicher 616 als Speicher für Userbezogene Daten, den Endgerätedatenspeicher 617 als Speicher für Endgeräte bezogene Daten, wie beispielsweise Interaktions- und Wiedergabemöglichkeiten, den Session-Datenspeicher 618 für die auf das Übertragen der Videosequenz bezogenen Daten, sowie den Protokollspeicher 614 zum langfristigen Speichern der Aktivierungen und Bestätigungen des Users in interaktiven Videosequenzen. Die CPU 611 kann dabei den Ablauf entsprechend einem der oben dargestellten erfindungsgemäßen Verfahren steuern.

Das Endgerät 2 empfängt die Videosequenz über die Schnittstelleneinheit 626 und gibt sie, gesteuert von der CPU 624 in dem Display 627 und mittels des Lautsprechers 621 wieder. Der Betrachter der Videosequenz nimmt die Nutzinformation in der Videosequenz wahr und kann auf die Anforderung, beispielsweise ein weiterer aktivierbarer Hot Spot in der Videosequenz, durch eine entsprechende Eingabe mittels Mikrofon 622, Tastatur 628 oder Zeigeeinheit 629 die Wahrnehmung der Nutzinformation bestätigen. Die Anforderung kann die Erzeugung einer Zufallszahl durch den Zufallszahlengenerator 623 in dem Endgerät 2 für die zufällige Ausgestaltung der zur Bestätigung notwendigen Interaktion des Betrachters bedingen. Der Speicher 625 kann als Datenpuffer für die übertragene Videosequenz dienen, wenn die Wiedergabe unterbrochen oder langsamer als die Übertragung ist. In der Regel wird dem Endgerät 2 nicht mehr von der Videosequenz übertragen, als für eine flüssige Wiedergabe nötig, um nicht unnötig Daten zu übertragen und flexibel auf Interaktionen reagieren zu können. Das Endgerät 2 ist in der Regel einem Betrachter zugeordnet, kann aber auch einer Vielzahl von Betrachtern zur Verfügung stehen.

Weiterhin kann die Anforderung getrennt oder zusammen mit der Videosequenz übertragen und wiedergegeben werden. Gegen eine getrennte Übertragung spricht eine dann eventuell notwendige Absicherung der Anforderung. Die Bestätigung wird in einigen Systemen abgesichert übertragen werden, um einen Missbrauch zu verhindern. Als Absicherung kann beispielsweise jede Form der Verschlüsselung oder eines authentisierenden Merkmals (Message Authentication Code) dienen.

Der Einsatz der Programmiersprache JAVA und eines JAVA-fähigen Endgerätes 2 ermöglicht beispielsweise dem Anbieter 1 seine Wiedergabesoftware als JAVA-Applet zusammen mit der Videosequenz an das Endgerät 2 zu übertragen, dadurch können beispielsweise die Zufallszahl auf dem Endgerät 2 erzeugt werden und auch Teile der Steuerungsaufgaben vom Anbieter 1 in das Endgerät 2 verlagert werden. Beispielsweise kann die Wiedergabe der Videosequenz in Abhängigkeit von der Bestätigung durch eine Betrachteraktion in dem Endgerät 2 erfolgen.

In Fig. 7 ist schematisch ein System mit einem mobilen Endgerät oder Mobiltelefon 71 dargestellt, dem über einen Webserver 73 Inhalte beispielsweise des Internet zur Verfügung stehen. Über das Endgerät 71 wird beim Webserver 73 eine Videosequenz angefordert. Vor oder bei dem Start der Videosequenz fordert der Webserver 73 von einem Auswertungsserver 75 eine Session-ID für den Vorgang unter Mitteilung der IP-Adresse des Endgerätes 71 an. Die Session-ID ist diesem Vorgang und bei dem Auswertungsserver 75 einem bestimmten User über die IP-Adresse des Endgerätes 71 zugeordnet. Der Auswertungsserver 75 verfügt über alle im Rahmen des Video Data Mining verfügbaren Daten bezogen auf den User und optional auch die angeforderte Videosequenz. Er kann dem Webserver 73 also wertvolle Hinweise beispielsweise eine Startkonfiguration für eine personalisierte Version der angeforderten Videosequenz geben. Einem User der häufig Sportnachrichten als Videosequenz abruft, wird also auch wenn er Tagesnachrichten als Videosequenz anfordert bevorzugt Sportartikelwerbung angeboten. Der Webserver 73 kann dann die personalisierte Version erstellen, die er an das Mobiltelefon 71 überträgt. Die Videosequenz wird dabei gemäß einem Mobilfunkstandard, beispielsweise UMTS, übertragen. Für UMTS ist beispielsweise das Erstellen einer personalisierten Version der Videosequenz in Abhängigkeit von dem Aufenthaltsort des Mobiltelefon 71, also lokalisierte Werbung, möglich.

Der Webserver 73 protokolliert Interaktionen des Betrachters mit der Videosequenz auf seinem Mobiltelefon 71 in einem Logfile 74, das auch dem Auswertungsserver 75 zur Verfügung steht. Der Auswertungsserver 75 speichert die Daten aus dem Logfile 74 beispielsweise geordnet nach Daten bezogen auf die Videosequenz (Film) 76, Userdaten 77 und Hotspot-Daten 78. Zu den gespeicherten Daten gehören beispielsweise Nutzergruppe, Aufenthaltsort, Zeit und Datum, Softwareversion auf dem Mobilteltefon 71, Videosequenz, Interaktionsdauer in der Videosequenz, sowie auf die eine Videosequenz und das Verhalten des Betrachters bezogene Daten.

Zur Kontrolle, ob der Betrachter eine Nutzinformation in der Videosequenz wahrgenommen hat, fordert der Webserver 73 eine Zufallszahl vom Zufallszahlengenerator 72 an und sendet eine Anforderung der Bestätigung der Wahrnehmung der Nutzinformation an das Mobiltelefon 71. Die Wahmehmungsbestätigung erfolgt auf dem Mobiltelefon 71 entsprechend der Anforderung durch eine Interaktion des Betrachters der Videosequenz mit dem Mobiltelefon 71 in Abhängigkeit von der Zufallszahl, beispielsweise durch Drücken einer von der Zufallszahl bestimmten Taste. Die Interaktion des Betrachters mit dem Mobiltelefon 71 in Antwort auf die Anforderung wird vom Webserver 73 im Logfile 74 protokolliert.

Wie für das erfindungsgemäße Verfahren dargelegt gibt es unterschiedliche Möglichkeiten auf eine Wahrnehmungsbestätigung zu reagieren. Abhängig von dem implementierten Verfahren oder dem zugrunde liegenden Systemansatz kann entweder die Software in dem Mobiltelefon 71 bei falscher Interaktion die Wiedergabe der Videosequenz beenden oder der Webserver 73 eine nicht erfolgte Interaktion des Betrachters durch Unterbrechen der Übertragung der Videosequenz beantworten. Weiterhin kann der Webserver beispielsweise das Übertragen der Videosequenz zu dem Mobiltelefon 71 vor Übertragen der Anforderung unterbrechen, um erst nach Erhalt einer Bestätigung für die Wahrnehmung des Nutzinformation in der Videosequenz mit dem Übertragen der Videosequenz fortzufahren.

Der Webserver 73 kann angepasst an protokollierte Interaktionen des Betrachters mit seinem Endgerät die Inhalte der Videosequenz anpassen, beispielsweise, um dem Betrachter die Nutzinformation so lange zu wiederholen, bis er sie wahrgenommen hat. Es entsteht somit ein System zum Bereitstellen von personalisierter Werbung für einen Betrachter an seinem Endgerät 71, deren Wahrnehmung durch den Betrachter zusätzlich kontrolliert werden kann.

Ein Analyst 79 hat über den Auswertungsserver 75 Zugang zu den gespeicherten Daten 76 bis 78, um weitere statistische Auswertungen oder Anpassungen im System 71 bis 78 vorzunehmen. Der Zugang ist dabei abgesichert, so dass nur der Analyst Zugang zu den Daten hat. In der Regel werden dem Analysten nur anonymisierte Daten zur Auswertung bereitgestellt. Während die Einheiten 71 bis 75 online miteinander agieren, können die Aktionen zwischen der Einheiten 75 bis 79 offline, also unabhängig von einem Zeitpunkt der Übertragung der Videosequenz erfolgen.

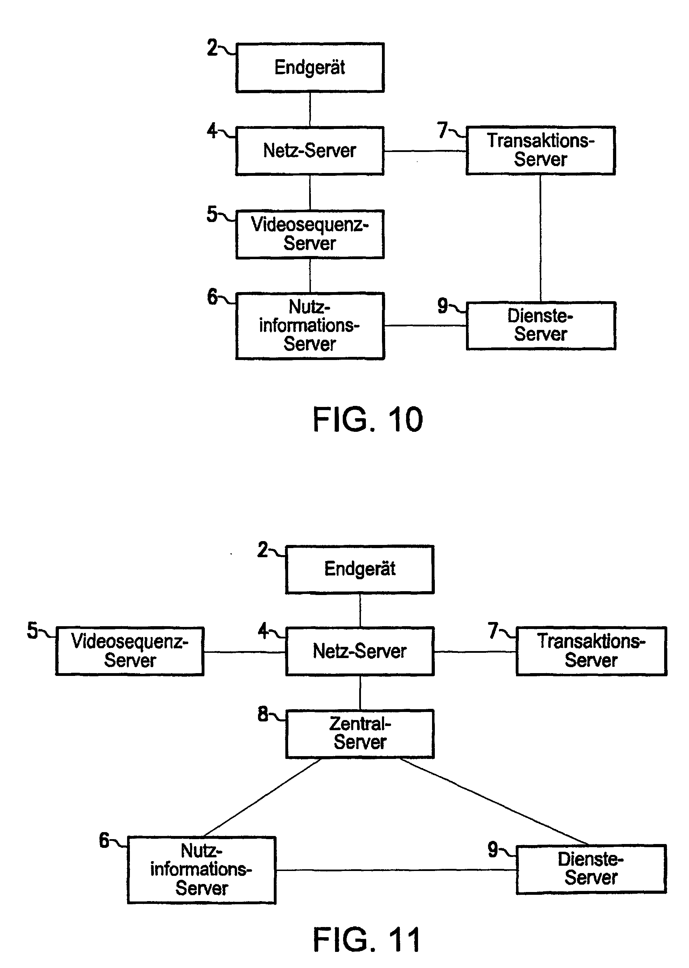

Je nach Ausgestaltung eines Systemansatzes, beispielsweise mit:
- einem Netzbetreiber, der das Übertragungsnetz für die Übertragung bereitstellt,
- einem Online-Händler für das Abwickeln des Kaufs der Waren/Dienste im Netz,
- einem Werbetreibenden als Anbieter zu bewerbender Waren/Dienste,
- einem Content-Provider, der die Videosequenz erstellt und zugänglich macht, und
- einem User mit seinem Endgerät, der als potenzieller Kunde Waren/Dienste kaufen soll, und optional
- einem zusätzlichen zentralen Systembetreiber
sind anbieterseitig viele Ausgestaltungen des in Fig. 7 dargestellten Systems möglich. Zwei dieser Möglichkeiten sind in Figur 10 und 11 dargestellt.

Fig. 10 zeigt ein Endgerät 2, das mit einem Netz-Server 4 eines Netzbetreibers verbunden ist. Für das Endgerät 2 wird über den Netz-Server 4 eine Videosequenz übertragen, die von einem Videosequenz-Server 5 eines Content-Provider bereitgestellt wird. Der Netz-Server 4 speichert eine für das Endgerät 2 bereitgestellte Übertragungskapazität, also die Summe der übertragenen Daten oder den Zeitbedarf für die Übertragung. Der Netzbetreiber rechnet beispielsweise anhand dieser Daten mit dem Besitzer des Endgeräts 2 eine Nutzungsgebühr ab.

Der Content-Provider stellt auf seinem Videosequenz-Server 5 eine Vielzahl von Videosequenzen bereit. Die bereitgestellten Videosequenzen werden zunächst unabhängig von einer Nutzinformation, aber möglicherweise orientiert an einem Dienst des Werbetreibenden erstellt. In die erstellten Videosequenzen werden Nutzinformationen aus einem Nutzinformations-Server 6 des Werbetreibenden eingebunden. Die Nutzinformationen passt der Werbetreibende an die von ihm an seinem Dienste-Server 9 angebotenen Dienste an. Dabei kann das in Fig. 10 dargestellte System eine Vielzahl von Dienste-Servern 9 umfassen, also parallel für eine Vielzahl von Werbetreibenden verwendet werden.

In einem solchen System übernimmt der Videosequenz-Server 5 die zentralen verwaltenden Aufgaben: er protokolliert die Übertragung der Videosequenz, fordert ein Bestätigungssignal für die Wahrnehmung der Nutzinformation in der wiedergegebenen Videosequenz an, protokolliert ein von dem Endgerät 2 eingehendes Bestätigungssignal, protokolliert Interaktionen des Betrachters mit der Videosequenz, wertet die protokollierten Daten aus, steuert die weitere Übertragung entsprechend der Auswertung, und passt Inhalte der Videosequenz entsprechend der Auswertung an.

Dem Endgerät 2 werden im Videosequenz-Server 5 entsprechend seiner Bestätigungssignale Bonuspunkte gutgeschrieben, die er für einen Einkauf bei einem der Werbetreibenden verwenden kann. Alternativ werden bei für den Betrachter kostenlos übertragenen Videosequenzen die Bonuspunkte zur Abrechnung der Kosten zwischen Netzbetreiber und Werbetreibendem verwendet. Weiterhin speichert der Videosequenz-Server 5 die Zahl der für einen Dienste-Server 9 in Videosequenzen eingebunden Nutzinformationen. Der Content-Provider verrechnet seine Kosten anhand der für den Dienste-Server 9 übertragenen Nutzinformation mit dem Werbetreibenden.

Die auf dem Endgerät 2 wiedergegebene Videosequenz enthält beispielsweise ein aktivierbares Element als Nutzinformation, das auf einen Dienst oder eine Ware des Werbetreibenden verweist. Ein Transaktions-Server 7 des Online-Händler bietet über den Netz-Server 4 und das Endgerät 2 dem Betrachter der Videosequenz die Möglichkeit den Dienst oder die Ware des Dienste-Servers 9 anzufordern. Bei Aktivierung des aktivierbaren Elements werden dem Betrachter auf dem Endgerät 2 Bedingungen und Kosten für den Dienst oder die Ware dieser Nutzinformation angezeigt. Der Transaktions-Server 7 verwaltet weiterhin das Erbringen eines vom Endgerät 2 angeforderten Dienstes oder der Ware und auch die Zahlung für diese.

Fig. 11 zeigt ein System analog zu Fig. 10, das aber um einen Zentral-Server 8 erweitert ist Der Zentral-Server 8 übernimmt als Server eines zentralen Systembetreibers die verwaltenden und steuernden Aufgaben der einzelnen Server 5 bis 7 und 9, die in einem solchen System ihre Daten einbringen und optional ihre Aktionen protokollieren.

## Patentansprüche

1. Verfahren der durch eine prozessorgestützte Steuereinheit kontrollierten Übertragung einer Videosequenz mit einer Nutzinformation an ein Endgerät, in dem die Videosequenz für einen Betrachter wiedergegeben wird, mit den Schritten:
Übertragen (21) der Videosequenz zu einem Endgerät, mittels dessen die Videosequenz wiedergegeben wird;
durch die Steuereinheit gesteuertes Anfordern (22) eines Bestätigungssignals für die Wahrnehmung der Nutzinformation von dem Endgerät, wobei das Bestätigungssignal durch eine entsprechende Interaktion des Betrachters der Videosequenz mit dem Endgerät auslösbar ist und das Bestätigungssignal die Aufmerksamkeit des Betrachters bei der Wahrnehmung der Videosequenz bestätigt;
durch die Steuereinheit gesteuertes weiteres Übertragen (21,32) der Videosequenz, wenn das Bestätigungssignal erhalten wird und Abbrechen des Übertragens, wenn das Bestätigungssignal nicht erhalten wird;
wobei die zu der Auslösung des Bestätigungssignals notwendige Interaktion des Betrachters mit dem Endgerät variierend ausgestaltet ist.

2. Verfahren nach Anspruch 1, **dadurch gekennzeichnet, dass** das Anfordern in seiner Wiedergabe für den Betrachter (3) variierend ausgestaltet ist.

3. Verfahren nach Anspruch 1 oder 2, **dadurch gekennzeichnet, dass** eine Information, die bestimmt welche Interaktion des Betrachters als Bestätigung notwendig ist, wie eine Nutzinformation dargestellt wird.

4. Verfahren nach einem der Ansprüche 1 bis 3, **dadurch gekennzeichnet, dass** eine Zufallszahl erzeugt wird (45), um die Ausgestaltung der zu der Bestätigung notwendigen Interaktion zu beeinflussen.

5. Verfahren nach einem der Ansprüche 1 bis 4, **dadurch gekennzeichnet, dass** die Videosequenz eine interaktive Videosequenz ist, deren Aktivierungen durch den Betrachter (3) protokollierbar sind.

6. Verfahren nach Anspruch 5, **dadurch gekennzeichnet, dass** der Inhalt der Videosequenz an protokollierte Aktivierungen der interaktiven Videosequenz angepasst wird (43, 54).

7. Verfahren nach einem der Ansprüche 1 bis 6, **dadurch gekennzeichnet, dass** das vom Endgerät (2) erhaltene Bestätigungssignal gespeichert wird.

8. Verfahren nach einem der Ansprüche 1 bis 7, **dadurch gekennzeichnet, dass** das Anfordern (22) abhängig von der Videosequenz an einer bestimmten Stelle der Videosequenz erfolgt.

9. Verfahren nach einem der Ansprüche 1 bis 8, **dadurch gekennzeichnet, dass** das Endgerät (2) nach einem Mobilfunkstandard ausgebildet ist.

10. Vorrichtung zur Erfassung der Wahrnehmung eines Betrachters einer Nutzinformation in einer Videosequenz, die mittels eines Endgeräts (2) wiedergegeben wird, umfassend:
einen Videosequenzdatenspeicher (615), der eine Videosequenz für ein Übertragen zu dem Endgerät bereitstellt;
eine prozessorgestützte Steuereinheit (611), die das Übertragen der Videosequenz, ein Anfordern eines Bestätigungssignals für die Wahrnehmung der Nutzinformation von dem Endgerät und ein weiteres Übertragen abhängig von dem Bestätigungssignal so steuert, dass das weitere Übertragen erfolgt, wenn das Bestätigungssignal empfangen wird, und das weitere Übertragungen nicht erfolgt, wenn das Bestätigungssignal nicht empfangen wird, wobei das Bestätigungssignal durch eine entsprechende Interaktion des Betrachters der Videosequenz mit dem Endgerät auslösbar ist, das Bestätigungssignal die Aufmerksamkeit des Betrachters bei der Wahrnehmung der Videosequenz bestätigt und die zu der Auslösung der Bestätigungssignals notwendige Interaktion des Betrachters mit dem Endgerät variierend ausgestaltet ist; und
eine Schnittstelleneinheit (613), über welche die Videosequenz und das Anfordern der Wahrnehmungsbestätigung zu dem Endgerät (2) übertragen wird.

11. Vorrichtung nach Anspruch 10, **dadurch gekennzeichnet, dass** die Steuereinheit (611) Inhalte der bereitgestellten Videosequenz steuert.

12. Vorrichtung nach Anspruch 10 oder 11, **dadurch gekennzeichnet, dass** die Vorrichtung weiter umfasst:
einen Zufallszahlengenerator (612), der Zufallszahlen für eine zufällige Ausgestaltung der zu der Bestätigung notwendigen Interaktion erzeugt.

13. Vorrichtung nach einem der Ansprüche 10 bis 12, **dadurch gekennzeichnet, dass** die Vorrichtung weiter umfasst:
einen Protokolldatenspeicher (614) zum Protokollieren der Wahmehmungsbestätigung.

14. Vorrichtung nach einem der Ansprüche 10 bis 13, **dadurch gekennzeichnet, dass** die Vorrichtung weiter umfasst:
einen Vorgangsdatenspeicher (618), für ein Speichern von Interaktionen des Betrachters mit der Videosequenz, die eine interaktive Videosequenz ist.

15. Vorrichtung nach einem der Ansprüche 10 bis 14, **dadurch gekennzeichnet, dass** die Vorrichtung weiter umfasst:
einen Userdatenspeicher (616) mit auf den Betrachter der Videosequenz bezogenen Daten von Interaktionen mit bisher für den Betrachter wiedergegebenen Videosequenzen.

16. System zur Erfassung der Wahrnehmung einer Nutzinformation in einer mittels eines Endgerätes wiedergegebenen Videosequenz, mit einer Vorrichtung gemäß Anspruch 10 und einem Endgerät umfassend zumindest eine Wiedergabe- (621, 627) und eine Interaktionseinheit (622,627,628 und 629).

17. System nach Anspruch 16, das Endgerät umfassend:
eine Schnittstelleneinheit (626) zum Empfangen der wiederzugebenden Videosequenz und einer Anforderung eines Bestätigungssignals für die Wahrnehmung der Nutzinformation von dem Endgerät,
eine Wiedergabeeinheit (621,625,627) zum Wiedergeben der Videosequenz;
einen Zufallszahlengenerator (623), der eine Zufallszahl erzeugt;
eine Interaktionseinheit (622,628,629) zum Empfangen einer Interaktion des Betrachters, die das Bestätigungssignal auslöst; und
eine Steuereinheit (624,625), welche die Zufallszahl verwendet, um die zu der Bestätigung notwendige Interaktion variierend auszugestalten.

18. Speichermedium enthaltend ein Computerprogramm das ein Verfahren nach einem der Ansprüche 1 bis 9 ausführt.

## Claims

1. Method for transmission, under the control of a processor-supported control unit, of a video sequence with useful information to a terminal device, in which the video sequence is reproduced for a viewer, with the steps:
transmission (21) of the video sequence to a terminal device, with which the video sequence is reproduced;
request (22), controlled by the control unit, for a confirmation signal from the terminal device for the perception of the useful information, where the confirmation signal can be triggered by a corresponding interaction of the viewer of the video sequence with the terminal device, and the confirmation signal confirms the viewer's attentiveness in perceiving the video sequence.
further transmission (21, 32), controlled by the control unit, of the video sequence, if the confirmation signal is received and
discontinuance of the transmission if the confirmation signal is not received;
the necessary interaction of the viewer with the terminal device for triggering the confirmation signal being arranged to vary.

2. Method as claimed in Claim 1, **characterized in that** the request is arranged to vary in its reproduction for the viewer (3).

3. Method as claimed in Claim 1 or 2, **characterized in that** information that determines what interaction is necessary from the viewer as confirmation is presented as user information.

4. Method as claimed in any one of Claims 1 to 3, **characterized in that** a random number is generated (45), in order to influence the form of the interaction necessary for the confirmation.

5. Method as claimed in any one of Claims 1 to 4, **characterized in that** the video sequence is an interactive video sequence, whose activations by the viewer (3) can be logged.

6. Method as claimed in Claim 5, **characterized in that** the contents of the video sequence are adapted to logged activations of the interactive video sequence (43, 54).

7. Method as claimed in any one of Claims 1 to 6, **characterized in that** the confirmation signal received from the terminal device (2) is saved.

8. Method as claimed in any one of Claims 1 to 7, **characterized in that** the request (22) occurs depending on the video sequence at a particular point in the video sequence.

9. Method as claimed in any one of Claims 1 to 8, **characterized in that** the terminal device (2) is developed according to a mobile telephony standard.

10. Device for recording the perception of a viewer of useful information in a video sequence, which is reproduced with a terminal device (2), comprising:
a video sequence data memory (615), which provides a video sequence for a transmission to the terminal device:
a processor-supported control unit (611), which controls the transmission of the video sequence, a request for a confirmation signal for the perception of the useful information from the terminal device and a further transmission depending on the confirmation signal, in such a way that the further transmission takes place if the confirmation signal is received, and the further transmission does not take place if the confirmation signal is not received, where the confirmation signal can be triggered by a corresponding interaction of the viewer of the video sequence with the terminal device, the confirmation signal confirms the viewer's attentiveness in perceiving the video sequence and the necessary interaction of the viewer with the terminal device for triggering the confirmation signal is arranged to vary; and
an interface unit (613), over which the video sequence and the request for confirmation of perception is transmitted to the terminal device (2).

11. Device as claimed in Claim 10, **characterized in that** the control unit (611) controls content of the provided video sequence.

12. Device as claimed in Claim 10 or 11, **characterized in that** the device further comprises:
a random number generator (612), which generates random numbers for a random arrangement of the interaction needed for the confirmation.

13. Device as claimed in any one of Claims 10 to 12, **characterized in that** the device further comprises:
a log data memory (614) for logging the confirmation of perception.

14. Device as claimed in any one of Claims 10 to 13, **characterized in that** the device further comprises:
a transaction data memory (618), for saving interactions of the viewer with the video sequence, which is an interactive video sequence.

15. Device as claimed in any one of Claims 10 to 14, **characterized in that** the device further comprises:
a user data memory (616) with data related to the viewer of the video sequence and to interactions with video sequences previously reproduced for the viewer.

16. System for recording the perception of useful information in a video sequence reproduced using a terminal device, with a device as in Claim 10 and a terminal device containing at least a reproduction unit (621, 627) and an interaction unit (622,627,628 and 629).

17. System as claimed in Claim 16, the terminal device containing:
an interface unit (626) for receiving the video sequence to be reproduced and a request for a confirmation signal for the perception of the user information from the terminal device,
a reproduction unit (621,625,627) for reproducing the video sequence;
a random number generator (623), which generates a random number;
an interaction unit (622,628,629) for receiving an interaction from the viewer, which triggers the confirmation signal; and
a control unit (624,625), which uses the random number in order to arrange the variation of the interaction necessary for the confirmation.

18. Storage medium containing a computer program that executes a method as claimed in any one of Claims 1 to 9.

## Revendications

1. Procédé qui effectue à travers une unité de commande assistée par processeur la transmission contrôlée d'une séquence vidéo avec une information utile sur un terminal, dans lequel la séquence vidéo est reproduite pour un lecteur, comprenant les étapes consistant à :
- transmettre (21) la séquence vidéo à un terminal, à travers lequel la séquence vidéo est reproduite,
- demander (22) sous le contrôle de l'unité de commande un signal de confirmation pour la perception de l'information utile à partir du terminal, moyennant quoi le signal de confirmation peut être déclenché par une interaction conforme du lecteur de la séquence vidéo avec le terminal et le signal de confirmation valide la prise en compte par le lecteur lors de la perception de la séquence vidéo,
- transmettre en outre (21, 32) sous le contrôle de l'unité de commande la séquence vidéo, lorsque le signal de confirmation est obtenu, et interrompre la transmission lorsque le signal de confirmation n'est pas obtenu,
moyennant quoi l'interaction du lecteur avec le terminal, nécessaire pour déclencher le signal de confirmation, est configurée par modulation.

2. Procédé selon la revendication 1, **caractérisé en ce que** la demande, dans sa reproduction pour le lecteur (3), est configurée par modulation.

3. Procédé selon la revendication 1 ou 2, **caractérisé en ce qu'**une information, qui définit quelle interaction du lecteur est nécessaire pour la confirmation, est représentée comme une information utile.

4. Procédé selon l'une quelconque des revendications 1 à 3, **caractérisé en ce qu'**un nombre aléatoire est produit (45) pour influencer la configuration de l'interaction nécessaire pour la confirmation.

5. Procédé selon l'une quelconque des revendications 1 à 4, **caractérisé en ce que** la séquence vidéo est une séquence vidéo interactive, dont les activations peuvent être programmées en série par le lecteur (3).

6. Procédé selon la revendication 5, **caractérisé en ce que** le contenu de la séquence vidéo est adapté (43, 54) aux activations programmées de la séquence vidéo interactive.

7. Procédé selon l'une quelconque des revendications 1 à 6, **caractérisé en ce que** le signal de confirmation obtenu à partir du terminal (2) est mémorisé.

8. Procédé selon l'une quelconque des revendications 1 à 7, **caractérisé en ce que** la demande (22) qui dépend de la séquence vidéo s'ensuit à une place déterminée de la séquence vidéo.

9. Procédé selon l'une quelconque des revendications 1 à 8, **caractérisé en ce que** le terminal (2) est configuré selon une norme de téléphonie mobile.

10. Dispositif pour recenser la perception par un lecteur d'une information utile dans une séquence vidéo, qui est reproduite au moyen d'un terminal (2) comprenant :
- une mémoire pour les données des séquences vidéo (615), qui prépare une séquence vidéo pour la transmission au terminal,
- une unité de commande assistée par processeur (611), qui contrôle la transmission de la séquence vidéo, la demande d'un signal de confirmation pour la perception de l'information utile par le terminal et une autre transmission dépendant du signal de confirmation, de sorte qu'une autre transmission s'ensuit lorsque le signal de confirmation est reçu et qu'une autre transmission ne s'ensuit pas lorsque le signal de confirmation n'est pas reçu, moyennant quoi le signal de confirmation peut être déclenché par une interaction conforme du lecteur de la séquence vidéo avec le terminal, que le signal de confirmation valide la prise en compte par le lecteur lors de la perception de la séquence vidéo et que l'interaction du lecteur avec le terminal, nécessaire pour déclencher le signal de confirmation, est configurée par modulation, et
- une unité d'interface (613), sur laquelle la séquence vidéo, avec la demande de confirmation de la perception, est transmise au terminal (2).

11. Dispositif selon la revendication 10, **caractérisé en ce que** l'unité de commande (611) contrôle les contenus de la séquence vidéo préparée.

12. Dispositif selon la revendication 10 ou 11, **caractérisé en ce que** le dispositif comprend en outre :
- un générateur de nombres aléatoires (612) qui produit des nombres aléatoires dans le cas d'une configuration occasionnelle en vue de l'interaction nécessaire pour la confirmation.

13. Dispositif selon l'une quelconque des revendications 10 à 12, **caractérisé en ce que** le dispositif comprend en outre :
- une mémoire de données sous forme de liste (614) pour définir la procédure de confirmation de la perception.

14. Dispositif selon l'une quelconque des revendications 10 à 13, **caractérisé en ce que** le dispositif comprend en outre :
- une mémoire de données de processus (618), pour stocker les interactions du lecteur avec la séquence vidéo, qui est une séquence vidéo interactive.

15. Dispositif selon l'une quelconque des revendications 10 à 14, **caractérisé en ce que** le dispositif comprend en outre :
- une mémoire des données utilisateur (616) avec les données affichées sur le lecteur de la séquence vidéo concernant les interactions avec les séquences vidéos reproduites jusqu'alors pour le lecteur.

16. Système pour le recensement de la perception d'une information utile dans une séquence vidéo reproduite au moyen d'un terminal, avec un dispositif selon la revendication 10 et un terminal comprenant au moins une unité de reproduction (621, 627) et une unité d'interaction (622, 627, 628 et 629).

17. Système selon la revendication 16, le terminal comprenant :
- une unité d'interface (626) pour la réception de la séquence vidéo à reproduire et d'une demande d'un signal de confirmation pour la perception de l'information utile par le terminal,
- une unité de reproduction (621, 625, 627) pour reproduire la séquence vidéo,
- un générateur de nombres aléatoires (623) qui produit un nombre aléatoire,
- une unité d'interaction (622, 628, 629) pour la réception d'une interaction du lecteur, qui déclenche le signal de confirmation, et
- une unité de commande (624, 625) qui utilise le nombre aléatoire pour configurer par modulation l'interaction nécessaire pour la confirmation.

18. Médium de stockage comprenant un programme d'ordinateur qui exécute un procédé selon l'une quelconque des revendications 1 à 9.
